(19) **Europäisches Patentamt European Patent Office Office européen des brevets**

(11) **EP 4 606 665 B1**

(12) **EUROPEAN PATENT SPECIFICATION**

(45) Date of publication and mention of the grant of the patent:
**25.03.2026 Bulletin 2026/13**

(21) Application number: **24158738.5**

(22) Date of filing: **20.02.2024**

(51) International Patent Classification (IPC):
**B60W 30/04** $^{(2006.01)}$    **B60W 40/109** $^{(2012.01)}$
**B60W 40/112** $^{(2012.01)}$    **B60W 50/14** $^{(2020.01)}$

(52) Cooperative Patent Classification (CPC):
**B60W 40/112; B60W 30/04; B60W 40/109;**
**B60W 50/14;** B60W 2300/125; B60W 2300/14;
B60W 2530/203

(54) **DETECTION OF POTENTIAL ROLLOVER SITUATIONS FOR A VEHICLE**

ERKENNUNG VON MÖGLICHEN ÜBERROLLSITUATIONEN FÜR EIN FAHRZEUG

DÉTECTION DE SITUATIONS POTENTIELLES DE RETOURNEMENT POUR UN VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**27.08.2025 Bulletin 2025/35**

(73) Proprietor: **Volvo Construction Equipment AB 631 85 Eskilstuna (SE)**

(72) Inventors:
- **ARIKERE, Adithya 422 50 GÖTEBORG (SE)**
- **KVIST, Roland 360 42 BRAÅS (SE)**
- **ANDERSSON, Magnus 352 60 VÄXJÖ (SE)**

(74) Representative: **Ström & Gulliksson AB P.O. Box 4188 203 13 Malmö (SE)**

(56) References cited:
US-A1- 2004 254 707    US-A1- 2005 033 486
US-A1- 2010 017 059    US-A1- 2010 274 450

## Description

### TECHNICAL FIELD

The disclosure relates generally to vehicle control. In particular aspects, the disclosure relates to detection of potential rollover situations for a vehicle. The disclosure can be applied to heavy-duty vehicles, such as trucks, buses, and construction equipment, among other vehicle types. The suggested approaches may be particularly suitable for vehicles, such as articulated haulers, with a joint that allows free rolling around the longitudinal axis of the vehicle. Although the disclosure may be described with respect to a particular vehicle, the disclosure is not restricted to any particular vehicle.

### BACKGROUND

Rollover accidents are typically very expensive. For example, they may cause irreversible damage to the vehicle.

Therefore, there is a need for approaches of mitigation of rollover (e.g., avoiding rollover, decreasing the probability of rollover, etc.).

US 2001/254707 A1 describes an approach for determining vehicular relative roll angle during a potential rollover event.

US 2010/274450 A1 describes an approach for predicting vehicle rollover during a trip-over event.

US 2005/033486 A1 describes an approach for controlling a safety system of a vehicle in response to conditions sensed by tire sensors.

US 2010/017059 A1 describes a control system that determines a roll conditions in response to a yaw rate sensor and a pitch rate sensor without having a roll rate sensor.

### SUMMARY

Various aspects may aim to solve, mitigate, alleviate, or eliminate at least some of the above or other disadvantages.

According to a first aspect of the disclosure, a computer system is provided for detecting potential rollover situations for a vehicle comprising one or more vehicle units. The computer system comprises processing circuitry configured to acquire lateral and vertical wheel forces for one of the vehicle units, and detect potential rollover for the vehicle unit based on the lateral and vertical wheel forces as compared between first and second lateral sides of the vehicle unit. The first aspect of the disclosure may seek to provide an arrangement configured to enable vehicle rollover mitigation.

A technical benefit may include that upcoming and/or current situations in which rollover is certain or likely to occur can be detected. The detection may be improved compared to other approaches for rollover detection. For example, the detection may be more reliable, and/or more robust, and/or more accurate than for other approaches for rollover detection. Alternatively or additionally, the probability of missed detection, and/or the probability of false detection, may be may be decreased compared to other approaches for rollover detection. Yet alternatively or additionally, earlier detection may be achieved than for other approaches for rollover detection.

Additionally or alternatively, a technical benefit may include that already measured and/or calculated force values may be used for the purpose of rollover detection. For example, force values determined based on measurements by wheel mounted inertial measurement units (IMUs) and/or force values predicted based on actuator request may be used for the rollover detection.

According to a second aspect of the disclosure, a computer-implemented method is provided for detecting potential rollover situations for a vehicle comprising one or more vehicle units. The method comprises acquiring (by a processor device of a computer system) lateral and vertical wheel forces for one of the vehicle units, and detecting (by the processor device) potential rollover for the vehicle unit based on the lateral and vertical wheel forces as compared between first and second lateral sides of the vehicle unit. The second aspect of the disclosure may seek to enable vehicle rollover mitigation.

A technical benefit may include that upcoming and/or current situations in which rollover is certain or likely to occur can be detected. The detection may be improved compared to other approaches for rollover detection. For example, the detection may be more reliable, and/or more robust, and/or more accurate than for other approaches for rollover detection. Alternatively or additionally, the probability of missed detection, and/or the probability of false detection, may be may be decreased compared to other approaches for rollover detection. Yet alternatively or additionally, earlier detection may be achieved than for other approaches for rollover detection.

Additionally or alternatively, a technical benefit may include that already measured and/or calculated force values may be used for the purpose of rollover detection. For example, force values determined based on measurements by wheel mounted inertial measurement units (IMUs) and/or force values predicted based on actuator request may be used for the rollover detection.

Optionally in some examples, including in at least one preferred example, potential rollover may be detected responsive to the lateral wheel forces being larger for the first lateral side of the vehicle unit than for the second lateral side of the vehicle unit, and the vertical wheel forces being larger for the first lateral side of the vehicle unit than for the second lateral side of the vehicle unit. A technical benefit may include improved detection compared to other approaches for rollover detection.

Optionally in some examples, including in at least one preferred example, potential rollover may be detected responsive to a sum of the lateral and vertical wheel forces for the first lateral side of the vehicle unit exceeding a threshold value for the sum. A technical benefit may include improved detection compared to other approaches for rollover detection.

Optionally in some examples, including in at least one preferred example, potential rollover may be detected responsive to a derivative - with regard to time - of the sum of the lateral and vertical wheel forces for the first lateral side of the vehicle unit exceeding a threshold value for the derivative. A technical benefit may include improved detection compared to other approaches for rollover detection.

Optionally in some examples, including in at least one preferred example, potential rollover may be detected responsive to the lateral and/or vertical wheel forces for the second lateral side of the vehicle unit being less than respective threshold value(s) for the second lateral side. A technical benefit may include improved detection compared to other approaches for rollover detection.

Optionally in some examples, including in at least one preferred example, detecting potential rollover for the vehicle unit may be further based on a roll angle for the vehicle unit. A technical benefit may include further improved detection compared to other approaches for rollover detection. Additionally or alternatively, a technical benefit may include that already measured and/or calculated rollover angle values may be used for the purpose of rollover detection. For example, rollover angle values determined based on measurements by a centralized inertial measurement unit (IMU) and/or rollover angle values predicted based on a global request of forces and/or moments may be used for the rollover detection.

Optionally in some examples, including in at least one preferred example, potential rollover may be detected responsive to the roll angle exceeding a threshold value for the roll angle. A technical benefit may include further improved detection compared to other approaches for rollover detection.

Optionally in some examples, including in at least one preferred example, the vehicle comprises at least two vehicle units, and potential rollover may be detected responsive to a difference between the roll angle and another roll angle of another one of the at least two vehicle units exceeding a threshold value for the difference. A technical benefit may include further improved detection compared to other approaches for rollover detection.

Optionally in some examples, including in at least one preferred example, potential rollover may be detected responsive to a derivative - with regard to the roll angle - of a roll moment of the vehicle unit having a negative value and the roll moment multiplied by a sign of the roll angle exceeding a threshold value for the roll moment. A technical benefit may include further improved detection compared to other approaches for rollover detection.

Optionally in some examples, including in at least one preferred example, the method may further comprise - responsive to detecting potential rollover for the vehicle unit - issuing (by the processor device) a warning for an operator of the vehicle, and/or limiting (by the processor device) a speed of the vehicle. A technical benefit may include the vehicle rollover mitigation is achieved. Thereby, the probability of rollover accidents may be decreased.

According to a third aspect of the disclosure, a vehicle is provided that comprises the computer system of the first aspect. The third aspect of the disclosure may seek to provide a vehicle which has a relatively low probability of rollover accidents. A technical benefit may include that efficient rollover mitigation is enabled for the vehicle.

According to a fourth, not claimed, aspect of the disclosure, a control system is provided comprising one or more control units configured to perform the method of the second aspect.

According to a fifth aspect of the disclosure, a computer program product is provided, which comprises program code for performing, when executed by the processing circuitry, the method of the second aspect. The fifth aspect of the disclosure may seek to convey program code for rollover detection. A technical benefit may include that new vehicles and/or legacy vehicles may be conveniently configured, by software installation/update, to acquire lateral and vertical wheel forces for a vehicle unit, and detect potential rollover for the vehicle unit based on the lateral and vertical wheel forces as compared between first and second lateral sides of the vehicle unit.

According to a sixth aspect of the disclosure, a non-transitory computer-readable storage medium is provided. The non-transitory computer-readable storage medium comprises instructions, which when executed by the processing circuitry, cause the processing circuitry to perform the method the second aspect. The sixth aspect of the disclosure may seek to convey program code for rollover detection. A technical benefit may include that new vehicles and/or legacy vehicles may be conveniently configured, by software installation/update, to acquire lateral and vertical wheel forces for a vehicle unit, and detect potential rollover for the vehicle unit based on the lateral and vertical wheel forces as compared between first and second lateral sides of the vehicle unit.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 is a flowchart illustrating a method according to some examples.
FIG. 2 is a schematic drawing illustrating a side view of a vehicle according to some examples.
FIG. 3 is a schematic drawing illustrating a top view of a vehicle according to some examples.
FIG. 4 is a pair of schematic diagrams illustrating lateral and longitudinal forces according acting on a vehicle according to some examples.
FIG. 5 is a flowchart illustrating method steps according to some examples.
FIG. 6 is a schematic diagram illustrating a computer system for implementing examples disclosed herein, according to some examples.
FIG. 7 is a schematic drawing illustrating a computer program product, in the form of a non-transitory computer-readable storage medium, according to some examples.
FIG. 8 is a schematic block diagram of a control unit according to some examples.

## DETAILED DESCRIPTION

The detailed description set forth below provides information and examples of the disclosed technology with sufficient detail to enable those skilled in the art to practice the disclosure.

As already mentioned, it is generally desired to mitigate rollover accidents (e.g., avoid rollover accidents, or at least decrease the probability of rollover accidents). To this end, it may be preferable to have an approach for detecting upcoming and/or current situations in which rollover is certain or likely to occur.

It may be desirable to have early detection of potential rollover situations. Alternatively or additionally, it may be desirable to have reliable detection (e.g., as few false detections as possible and/or as few missed detections as possible).

Generally, it should be noted that approaches suggested herein may be applied to any suitable vehicle or vehicle combination, as suitable. For example, approaches suggested herein may be applied to heavy-duty vehicles (e.g., trucks, buses, construction equipment, etc.). The suggested approaches may be particularly suitable for vehicles with a joint that allows free rolling around the longitudinal axis of the vehicle (e.g., articulated haulers).

Also generally, it should be noted that rollover may refer to rollover of an entire vehicle, or to rollover of only one vehicle unit. For example, for vehicles with a joint that allows free rolling around the longitudinal axis of the vehicle, a rollover accident may include that the trailer unit rolls over while the tractor unit does not, or vice versa. Alternatively or additionally, for any vehicle with a tractor and a trailer unit, rollover by the trailer unit may cause the tractor unit to subsequently rollover as well.

Also generally, it should be noted that approaches suggested herein may be applied to any suitable terrain scenarios (e.g., flat or uneven, with obstacles, with varying slope, with varying banking, etc.).

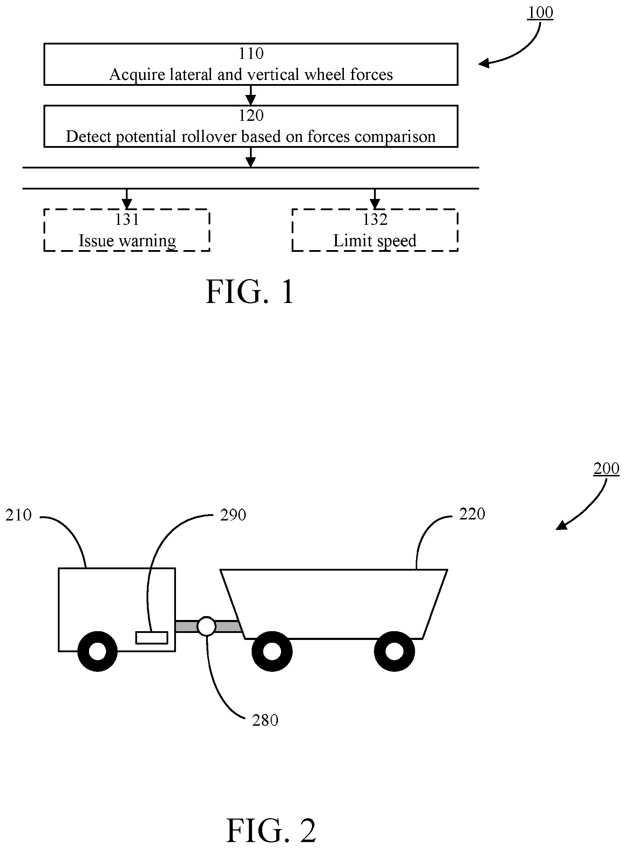

FIG. 1 illustrates a method 100 for detecting potential rollover situations for a vehicle comprising one or more (e.g., two) vehicle units. The method 100 is a computer-implemented method. For example, the method 100 may be executed by a processor device of a computer system.

As illustrated by step 110, the method 100 comprises acquiring lateral and vertical wheel forces for at least one (e.g., one, two, some, or all) of the vehicle units. The lateral and vertical wheel forces may be acquired for all wheels of the vehicle unit, or for only some wheels of the vehicle unit. The lateral and vertical wheel forces may be acquired in any suitable way.

According to some examples, measurements by wheel mounted (e.g., mounted within tire) accelerometers (e.g., IMUs) may be used to determine the lateral and/or vertical wheel forces. For example, the amplitude of an acceleration spike experienced when the accelerometer passes the contact patch between tire and ground may be used to estimate the lateral and/or vertical wheel forces. This approach for acquiring the lateral and vertical wheel forces is best suited for a vehicle in motion.

According to some examples, measurements by other sensors may be used (additionally or alternatively to wheel mounted accelerometers) to determine the lateral and/or vertical wheel forces. For example, a tire pressure sensor may be used to estimate the vertical force of a wheel (at standstill or in motion). Alternatively or additionally, any sensor associated with the suspension of a wheel (e.g., a load sensor, a pressure sensor, etc.) may be used to estimate the vertical force of a wheel (at standstill or in motion).

As illustrated by step **120,** the method **100** comprises detecting potential rollover for the vehicle unit based on the lateral and vertical wheel forces as compared between first and second lateral sides of the vehicle unit. The potential rollover could relate to the vehicle unit only (e.g., for a trailer unit of an articulated hauler), or to the entire vehicle.

As illustrated by optional steps **131** and **132,** the method **100** may further comprise - as a response to detecting potential rollover for the vehicle unit - issuing a warning for an operator of the vehicle, and/or limiting a speed of the vehicle (e.g., decreasing the speed, hindering the speed from increasing, etc.).

It should be noted that (additionally or alternatively) other rollover mitigation actions may be performed responsive to the detection of potential rollover. For example, the detection may be forwarded to a vehicle control unit which may be configured to vary other aspect of the vehicle than speed (e.g., acceleration, load distribution, brake distribution, etc.). One example mitigation action could include releasing rear brakes and applying high brake forces at the front of the vehicle to cause the vehicle to slowly roll backwards to escape a situation with rollover risk.

According to some examples, two or more levels of rollover risk are applied, where each level corresponds to a respective condition for detection (possibly a combination of conditions for detection) and is associated with a respective mitigation action (or combination of mitigation actions). For example a detection associated with a relatively low likelihood for rollover may trigger a warning for an operator of the vehicle, a detection associated with a medium likelihood for rollover may trigger hindering of the speed from increasing (possibly in combination with a warning), and a detection associated with a relatively high likelihood for rollover may trigger decrease of the speed (possibly in combination with a warning). It should be noted that numerous other examples may be envisioned (e.g., different number of levels, different respective conditions, different respective mitigation actions, etc.).

In some examples, the detection of potential rollover may be used to build and/or update a map over some specific geographical area (e.g., a construction site), where the detection of potential rollover is associated with a corresponding location (e.g., acquired using a positioning system, such as the Global Positioning System - GPS) and corresponding information regarding the vertical and lateral forces. Geographical information (e.g., ground slope, friction, etc.) and/or infrastructure information (e.g., course of driveways, obstacles, etc.) could also be used to strengthen the benefits of the map.

The map may be used for proactive vehicle control within the specific geographical area. For example, the operator of the vehicle may be proactively warned when locations where potential rollover is likely are approached. Alternatively or additionally, the speed may be proactively limited when locations where potential rollover is likely are approached.

The information regarding the vertical and lateral forces may be used to selectively perform proactive actions when a location of potential rollover is approached only for vehicles with similar (or otherwise relevant) force values as those relating to the previously detected potential rollover(s).

The detection of potential rollover based on the lateral and vertical wheel forces as compared between first and second lateral sides of the vehicle may be implemented in any suitable way.

In some examples, potential rollover is detected responsive to the lateral wheel forces being larger for the first lateral side of the vehicle unit than for the second lateral side of the vehicle unit, and the vertical wheel forces being larger for the first lateral side of the vehicle unit than for the second lateral side of the vehicle unit.

The condition relating to the lateral and vertical wheel forces as compared between first and second lateral sides of the vehicle may be supplemented by one or more other conditions for detection of potential rollover, and a few examples will be given in the following while it should be noted that other possibilities are not excluded.

In some examples, a supplemental condition for detection of potential rollover is that a sum of the lateral and vertical wheel forces for the first lateral side of the vehicle unit exceeds a threshold value for the sum.

In some examples, a supplemental condition for detection of potential rollover is that a derivative (with regard to time) of the sum of the lateral and vertical wheel forces for the first lateral side of the vehicle unit exceeds a threshold value for the derivative.

In some examples, a supplemental condition for detection of potential rollover is that the lateral and/or vertical wheel forces for the second lateral side of the vehicle unit are less than respective threshold value(s) for the second lateral side.

The condition(s) relating to the lateral and vertical wheel forces may be supplemented by one or more other conditions for detection of potential rollover, and a few examples will be given in the following of supplemental conditions for detection of potential rollover based on a roll angle while it should be noted that other possibilities are not excluded.

In some examples, a supplemental condition for detection of potential rollover is that the roll angle exceeds a threshold value for the roll angle.

In some examples, a supplemental condition for detection of potential rollover when the vehicle comprises at least two vehicle units is that a difference between the roll angles of different vehicle units exceeds a threshold value for the difference.

In some examples, a supplemental condition for detection of potential rollover is that a derivative (with regard to the roll angle) of a roll moment of the vehicle unit has a negative value and the roll moment multiplied by a sign of the roll angle exceeds a threshold value for the roll moment.

The roll angle of a vehicle unit may be acquired in any suitable way. For example, measurements by a centralized IMU of the vehicle unit may be used to estimate the roll angle.

The roll moment of a vehicle unit may be acquired in any suitable way. For example, the roll moment can be derived from the vertical and lateral forces, together with the position of the roll center.

It should also be noted that any suitable combination of the above or other example conditions may be used.

Any one or more of the thresholds mentioned above may be static or dynamically variable. Any suitable parameter(s) (e.g., vehicle speed, vehicle load, steering wheel angle, ground bank angle, friction coefficient, etc.) could be used to dynamically set the threshold value(s). For example, the threshold(s) may be set to stricter value(s) (i.e., earlier detection) when the vehicle speed is high than when it is low. Alternatively or additionally, the threshold(s) may be set to stricter value(s) (i.e., earlier detection) when the vehicle is loaded than when it is un-loaded. Yet alternatively or additionally, the threshold(s) may be set to stricter value(s) (i.e., earlier detection) when the steering angle is relatively far from zero than when it is relatively close to zero. Yet alternatively or additionally, the threshold(s) may be set to stricter value(s) (i.e., earlier detection) when the bank angle is relatively far from zero than when it is relatively close to zero. Yet alternatively or additionally, the threshold(s) may be set to stricter value(s) (i.e., earlier detection) when the friction is relatively low than when it is relatively high.

**FIG. 2** schematically illustrates a side view of an example vehicle **200** where the techniques disclosed herein can be advantageously applied. The vehicle **200** comprises a pull/tractor/towing unit **210** configured to tow one or more hauler/trailer unit(s) **220** in a known manner. The vehicle **200** has a joint **280** between the units **210, 220** that allows free rolling around the longitudinal axis of the vehicle. For example, the vehicle **200** may be an articulated hauler.

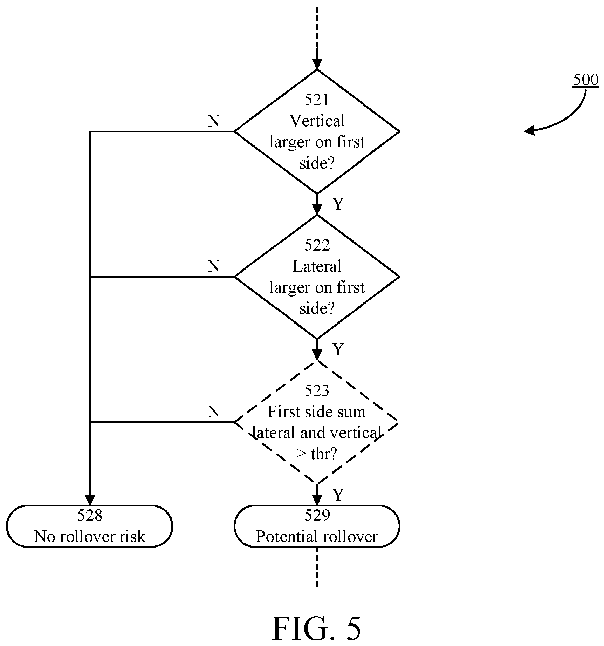

The tractor unit **210** and/or the trailer unit(s) **220** may comprise a vehicle control unit (VCU) **290** configured to perform various vehicle (unit) control functions, such as vehicle motion management (VMM). For example, any of one or more VCU(s) **290** may be configured to perform one or more steps as exemplified in connection with **FIG. 1** and/or **FIG. 5.** Thus, the techniques disclosed herein may be performed by any of one or more VCU(s) **290.**

The vehicle **200** further comprises device(s) (e.g., wheel mounted IMUs) configured to provide indications of lateral and vertical wheel forces for at least some of the wheels, and (optionally) device(s) (e.g., a central IMU) configured to provide indications of roll angle for at least one of the vehicle units **210, 220.**

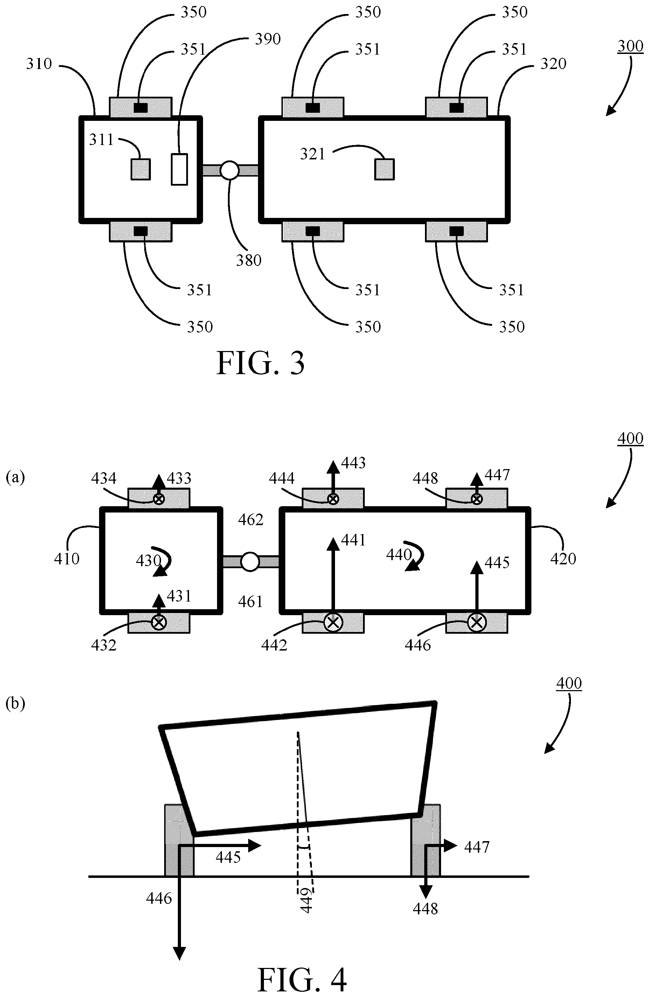

**FIG. 3** schematically illustrates a top view of an example vehicle **300** where the techniques disclosed herein can be advantageously applied. For example, the vehicle **300** may correspond to the vehicle **200** of **FIG. 2.** The vehicle **300** comprises a pull/tractor/towing unit **310** configured to tow one or more hauler/trailer unit(s) **320** in a known manner. The vehicle **300** has a joint **380** between the units **310, 320** that allows free rolling around the longitudinal axis of the vehicle. For example, the vehicle **300** may be an articulated hauler.

The tractor unit **310** and/or the trailer unit(s) **320** may comprise a vehicle control unit (VCU) **390** configured to perform various vehicle (unit) control functions, such as vehicle motion management (VMM). For example, any of one or more VCU(s) **390** may be configured to perform one or more steps as exemplified in connection with **FIG. 1** and/or **FIG. 5.** Thus, the techniques disclosed herein may be performed by any of one or more VCU(s) **390.**

The vehicle **300** further comprises devices **351** (e.g., wheel mounted IMUs) configured to provide indications of lateral and vertical wheel forces for at least some of the wheels **350,** and devices **311, 321** (e.g., central IMUs) configured to provide indications of roll angles for the vehicle units **310, 320.** The devices **351, 311, 321** may be operatively connected to the VCU **390,** and may be configured to provide information (from which the lateral and vertical wheel forces and the roll angles can be acquired) to the VCU **390.**

**FIG. 4** schematically illustrates a top view (a) and a rear view (b) of an example vehicle **400** where the techniques disclosed herein can be advantageously applied. For example, the vehicle **400** may correspond to the vehicle **200** of **FIG. 2** and/or to the vehicle **300** of **FIG. 3.** The vehicle **400** comprises a pull/tractor/towing unit **410** configured to tow one or more hauler/trailer unit(s) **420** in a known manner. The vehicle **400** has a joint between the units **410, 420** that allows free rolling around the longitudinal axis of the vehicle. For example, the vehicle **400** may be an articulated hauler.

**FIG. 4** schematically illustrates example lateral and longitudinal forces acting on the vehicle **400;** namely lateral wheel forces $F_{y1}, F_{y2}$ **431, 433** and vertical wheel forces $F_{z1}, F_{z2}$ **432, 434** for the pull unit **410,** and lateral wheel forces $F_{y3}$, $F_{y4}, F_{y5}, F_{y6}$ **441, 443, 445, 447** and vertical wheel forces $F_{z3}, F_{z4}, F_{z5}, F_{z6}$ **442, 444, 446, 448** for the hauler unit **420.**

**FIG. 4** also schematically illustrates example moments acting on the vehicle **400** and an example roll angle; namely moments $M_{xP}, M_{yP}, M_{zP}$ for the pull unit **410** (schematically shown as **430**), moments $M_{xH}, M_{yH}, M_{zH}$ for the hauler unit **420** (schematically shown as **440**), and roll angle $\alpha_H$ **449** for the hauler unit **420.** A roll angle $\alpha_P$ for the pull unit **410** may also be relevant even if not shown in **FIG. 4.**

The principles of step **120** of the method **100** of **FIG. 1** will now be exemplified with reference to the example vehicle **400.**

As already explained, step **120** of the method **100** comprises detecting potential rollover for the vehicle based on the lateral and vertical wheel forces as compared between first and second lateral sides of the vehicle. Thus, potential rollover may be detected for the vehicle **400** by any suitable comparison between one or more of the wheel forces **431, 432, 441, 442, 445, 446** on a first side **461** of the vehicle **400** and one or more of the wheel forces **433, 434, 443, 444, 447, 448** on a second side **462** of the vehicle **400**.

It should be noted that the potential rollover could relate to the entire vehicle **400** or to only one of the vehicle units **410, 420**.

It should also be noted that - generally - wheel forces may be acquired for all wheels of the vehicle, or for only some of the wheels as possible/suitable.

Also generally, it should be noted that the comparison of forces between first and second lateral sides of the vehicle may comprise any suitable selection of the acquired forces. For example, forces of a single wheel axle could be compared, or all forces of a vehicle unit could be compared, or all forces of a vehicle could be compared. Further, the selection of lateral forces to compare may be different from the selection of vertical forces to compare.

In some examples, potential rollover is detected responsive to the lateral wheel forces being larger for the first lateral side of the vehicle than for the second lateral side of the vehicle, and the vertical wheel forces being larger for the first lateral side of the vehicle than for the second lateral side of the vehicle. This condition aims to indicate that the first side not only carries higher vertical load than the second side, but also higher lateral load. For example, if the vehicle **400** goes into a curve turning to the right, there will be an increase of vertical and lateral forces on the outer side tires (i.e., left side of vehicle) compared to the inner side tires (i.e., left side of vehicle), as exemplified in **FIG. 4**. Thereby, false detections of potential rollover that could occur due to uneven terrain and/or uneven load if only vertical load was considered, might be avoided.

For the pull unit **410**, this condition may be expressed as $(F_{y1} > F_{y2}$ and $F_{z1} > F_{z2})$. For the hauler unit **420**, this condition may, for example, be expressed as $(F_{y3} > F_{y4}$ and $F_{z3} > F_{z4})$ or as $(F_{y5} > F_{y6}$ and $F_{z5} > F_{z6})$ or as $(F_{y3} > F_{y4}$ and $F_{z3} > F_{z4}$ and $F_{y5} > F_{y6}$ and $F_{z5} > F_{z6})$ or as $(F_{y3} + F_{y5} > F_{y4} + F_{y6}$ and $F_{z3} + F_{z5} > F_{z4} + F_{z6})$. For the entire vehicle 400, this condition may, for example, be expressed as $(F_{y1} + F_{y3} + F_{y5} > F_{y2} + F_{y4} + F_{y6}$ and $F_{z1} + F_{z3} + F_{z5} > F_{z2} + F_{z4} + F_{z6})$.

The condition relating to the lateral and vertical wheel forces as compared between first and second lateral sides of the vehicle may be supplemented by one or more other conditions for detection of potential rollover, as will be exemplified in the following with reference to the example vehicle **400**.

In some examples, a supplemental condition for detection of potential rollover is that a sum of the lateral and vertical wheel forces for the first lateral side of the vehicle exceeds a threshold value for the sum. This condition aims to indicate that the first side carries a relatively high total load (vertical plus lateral). Thereby, more accurate detections of potential rollover might be achieved (e.g., avoiding false positives and/or missed detections).

For the pull unit **410**, this condition may be expressed as $(F_{y1} + F_{z1} > thr_{sum,pull})$. For the hauler unit **420**, this condition may, for example, be expressed as $(F_{y3} + F_{y5} + F_{z3} + F_{z5} > thr_{sum,haul})$. For the entire vehicle **400**, this condition may, for example, be expressed as $(F_{y1} + F_{y3} + F_{y5} + F_{z1} + F_{z3} + F_{z5} > thr_{sum,veh})$.

In some examples, a supplemental condition for detection of potential rollover is that a derivative (with regard to time) of the sum of the lateral and vertical wheel forces for the first lateral side of the vehicle exceeds a threshold value for the derivative. This condition aims to indicate that the total load (vertical plus lateral) carried by the first side increases relatively quickly. Thereby, more accurate detections of potential rollover might be achieved (e.g., avoiding false positives and/or missed detections).

For the pull unit **410**, this condition may be expressed as $(\frac{\delta}{\delta t}(F_{y1} + F_{z1}) > thr_{der,pull})$. For the hauler unit **420**, this condition may, for example, be expressed as $(\frac{\delta}{\delta t}(F_{y3} + F_{y5} + F_{z3} + F_{z5}) > thr_{der,haul})$. For the entire vehicle **400**, this condition may, for example, be expressed as (

$\frac{\delta}{\delta t}(F_{y1} + F_{y3} + F_{y5} + F_{z1} + F_{z3} + F_{z5}) > thr_{der,veh})$.

In some examples, a supplemental condition for detection of potential rollover is that the lateral and/or vertical wheel forces for the second lateral side of the vehicle are less than respective threshold value(s) for the second lateral side. This condition aims to indicate that the total load (vertical plus lateral) or either the vertical or lateral load carried by the second side is relatively low (e.g., close to zero). For example, this condition could indicate situations where the wheel(s) of the second side of the vehicle is/are close to losing contact with the ground. Thereby, more accurate detections of potential rollover might be achieved (e.g., avoiding false positives and/or missed detections).

For the pull unit **410**, this condition may be expressed as $(F_{y2} + F_{z2} < thr_{2nd,pull})$ or as $(F_{y1} < thr_{2nd,pull})$ or as $(F_{z2} < thr_{2nd,pull})$. For the hauler unit **420**, this condition may, for example, be expressed as $(F_{y4} + F_{y6} + F_{z4} + F_{z6} > thr_{2nd,haul})$ or as $(F_{y4} + F_{y6} + > thr_{2nd,haul})$ or as $(F_{z4} + F_{z6} > thr_{2nd,haul})$. For the entire vehicle **400**, this condition may, for example, be expressed as $(F_{y2} + F_{y4} + F_{y6} + F_{z2} + F_{z4} + F_{z6} > thr_{2nd,veh})$ or as $(F_{y2} + F_{y4} + F_{y6} > thr_{2nd,veh})$ or as $(F_{z2} + F_{z4} + F_{z6} > thr_{2nd,veh})$.

The condition(s) relating to the lateral and vertical wheel forces may be supplemented by one or more other conditions for detection of potential rollover, as will be exemplified in the following with reference to the example vehicle **400.**

Using one or more supplemental conditions may further strengthen accuracy of the detections of potential rollover. For example, is the vehicle **400** is driven over rough terrain, one of the wheels may be entirely off the ground even if there is no risk of rollover. Using only force based rollover detection might possibly trigger rollover mitigation (e.g., warning, limited speed, etc.) in some of these scenarios, while one or more supplemental conditions may hinder false detections.

In some examples, a supplemental condition for detection of potential rollover is that the roll angle $\alpha$ exceeds a threshold value for the roll angle. This condition aims to indicate that the vehicle, or vehicle unit, is tilting substantially. Thereby, more accurate detections of potential rollover might be achieved (e.g., avoiding false positives and/or missed detections).

For the pull unit **410,** this condition may be expressed as $(|\alpha_P| > thr_{roll,pull})$. For the hauler unit **420,** this condition may be expressed as $(|\alpha_H| > thr_{roll,haul})$. For the entire vehicle **400,** this condition may, for example, be expressed as $(|(\alpha_P + \alpha_H)/2| > thr_{roll,veh})$.

In some examples, a supplemental condition for detection of potential rollover when the vehicle comprises at least two vehicle units is that a difference between the roll angles of different vehicle units exceeds a threshold value for the difference. This condition aims to indicate that one of the vehicle units is tilting substantially more than the other vehicle unit. Thereby, more accurate detections of potential rollover might be achieved (e.g., avoiding false positives and/or missed detections).

For the vehicle **400,** this condition may, for example, be expressed as $(|\alpha_P - \alpha_H| > thr_{\Delta roll,veh})$.

In some examples, a supplemental condition for detection of potential rollover involves the derivative (with regard to the roll angle $\alpha$) of the roll moment $M_x$ of a vehicle unit. To this end, it is noted that roll dynamics are stable (e.g., no ongoing rollover) when $\frac{\delta}{\delta\alpha}M_x < 0$, and that roll dynamics are unstable (e.g., ongoing rollover) when $\frac{\delta}{\delta\alpha}M_x > 0$, with $\frac{\delta}{\delta\alpha}M_x = 0$ being the inflection point. Any one or more of these expressions may be utilized for detection of potential rollover, as suitable.

For example, a possible supplemental condition for detection of potential rollover is that the derivative (with regard to the roll angle $\alpha$) of the roll moment $M_x$ of a vehicle unit has a negative value and the roll moment multiplied by a sign of the roll angle $M_x \text{sign}(\alpha)$ exceeds a threshold value for the roll moment. This condition aims to indicate that the roll dynamics are currently stable, but approaching instability. Thereby, more accurate detections of potential rollover might be achieved (e.g., avoiding missed detections).

For the pull unit **410,** this condition may be expressed as $(\frac{\delta}{\delta\alpha_P}M_{xP} < 0$ and $M_{xP}\text{sign}(\alpha_P) > thr_{mom,pull})$. For the hauler unit **420,** this condition may be expressed as $(\frac{\delta}{\delta\alpha_H}M_{xH} < 0$ and $M_{xH}\text{sign}(\alpha_H) > thr_{mom,haul})$.

The following combinations may also prove useful for rollover detection.

For example, one combined condition for detection may be expressed in the form of $(F_{Y1} > F_{Y2}$ and $F_{Z1} > F_{Z2})$ and $(F_{Y1} + F_{Z1} > thr_{sum})$ and $(|\alpha| > thr_{roll})$, where $F_{Y1}$ represents any suitable combination of lateral forces on a first side of the vehicle, $F_{Y2}$ represents any suitable combination of lateral forces on a second side of the vehicle, $F_{Z1}$ represents any suitable combination of vertical forces on a first side of the vehicle, $F_{Z2}$ represents any suitable combination of vertical forces on a second side of the vehicle, and $\alpha$ represents any suitable rollover angle metric of the vehicle.

Alternatively or additionally, one combined condition for detection may be expressed in the form of $(F_{Z1} > F_{Z2})$ and $(F_{Y1} + F_{Z1} > thr_{sum,low,1})$ and $(\frac{\delta}{\delta t}(F_{Y1} + F_{Z1}) > thr_{der})$, where $thr_{sum,low,1}$ has a lower value than $thr_{sum}$.

Yet alternatively or additionally, one combined condition for detection may be expressed in the form of $(F_{Z1} > F_{Z2})$ and $(F_{Y1} + F_{Z1} > thr_{sum,low,2})$ and $(F_{Y1} + F_{Z2} < thr_{2nd})$ and - optionally - $(|\alpha| > thr_{roll})$, where $thr_{sum,low,2}$ has a lower value than $thr_{sum}$.

**FIG. 5** illustrates a collection **500** of method steps for detecting potential rollover situations for a vehicle. The method steps of **FIG. 5** are computer-implemented and may, for example, be executed by a processor device of a computer system.

According to some examples, one or more of the method steps of **FIG. 5** may be implemented as part of step **120** of the method **100** described in connection to **FIG. 1.** Thus, one or more of the steps of **FIG. 5** may be seen as sub-steps of step **120** of the method **100.**

As illustrated by step **521,** it is determined whether or not the vertical wheel force(s) on one (first) side of the vehicle is/are larger than the vertical wheel force(s) on the other (second) side of the vehicle. If so (Y-path out of **521**), the process continues to step **522.** Otherwise (N-path out of **521**), it is concluded that there is no detected risk of rollover as illustrated by **528.**

It may be noted that the determination of step **521** may be seen as a determination of whether there is load displacement towards either side of the vehicle, and - if so - towards which of the sides (i.e., specifying which side is to be considered as the first side for the following steps). Consequently, the N-path out of **521** may be seen as corresponding to a situation when there is no load displacement towards either side of the vehicle. In some examples, the condition in step **521** may be adjusted so that the N-path out of **521** is followed when there is no, or a very small, load displacement.

When the process continues to step **522,** it is determined whether or not the lateral wheel force(s) on the first side of the vehicle is/are larger than the lateral wheel force(s) on the second side of the vehicle. If so (Y-path out of **522**), the process continues to optional step **523,** or directly to **529.** Otherwise (N-path out of **522**), it is concluded that there is no detected risk of rollover as illustrated by **528.**

In optional step **523,** it is determined whether or not a sum of the lateral and vertical wheel forces for the first lateral side of the vehicle exceeds a threshold value for the sum (thr; compare with $thr_{sum,i}$ mentioned in connection with **FIG. 4**). If so (Y-path out of **523**), the process continues to **529.** Otherwise (N-path out of **523**), it is concluded that there is no detected risk of rollover as illustrated by **528.**

As illustrated by **529,** potential rollover is detected when there is load displacement towards either (the first) side of the vehicle (step **521**) and the lateral wheel force(s) on the first side is/are larger than the lateral wheel force(s) on the second side (step **522**) and (optionally) the sum of the lateral and vertical wheel forces for the first lateral side exceeds the threshold value.

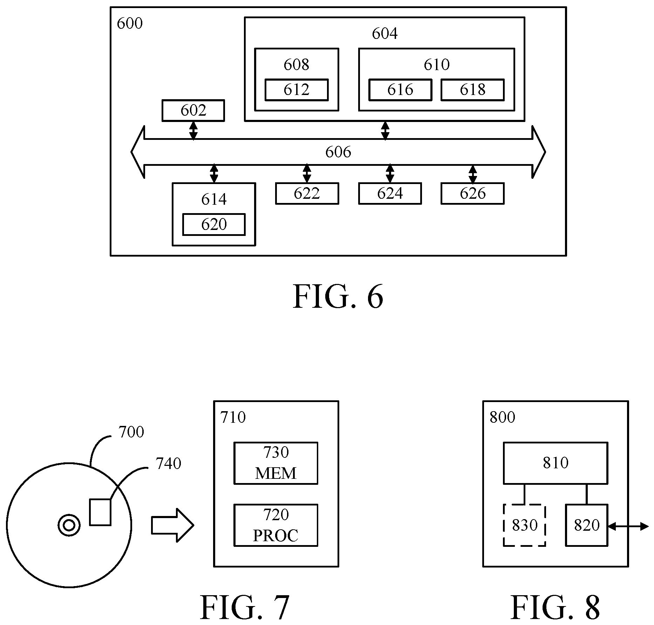

**FIG. 6** is a schematic diagram of a computer system **600** for implementing examples disclosed herein. For example, the computer system **600** (or part thereof) may be comprised in the VCU **290** of **FIG. 2** and/or the VCU **390** of **FIG. 3**. Alternatively or additionally, the computer system **600** may be configured to cause execution of (e.g., may be configured to perform) one or more steps of the method **100** of **FIG. 1** and/or one or more steps of the method **500** of **FIG. 5.**

The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a VCU.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 7** illustrates a computer program product exemplified as a non-transitory computer-readable medium in the form of a compact disc (CD) ROM **700.** The computer-readable medium has stored thereon program code **740** comprising instructions. The program code is loadable into processing circuitry (PROC; e.g., a data processing unit) **720,** which may, for example, be comprised in a VCU **710.** When loaded into the processing circuitry, the program code may be stored in a memory (MEM) **730** associated with, or comprised in, the processing circuitry. According to some examples, the program code may, when loaded into, and run by, the processing circuitry, cause execution of method steps according to any of the methods described herein; such as method steps discussed in connection to **FIG. 1** and/or **FIG. 5.**

**FIG. 8** schematically illustrates, in terms of a number of functional units, the components of a control unit **800** according to some examples. This control unit **800** may be comprised in the vehicle **200, 300, 400;** e.g., in the form of a VCU **290, 390.** Processing circuitry **810** is provided using any combination of one or more of a suitable central processing unit CPU, multiprocessor, microcontroller, digital signal processor DSP, etc., capable of executing software instructions stored in a computer program product, e.g. in the form of a storage medium **830.** The processing circuitry **810** may further be provided as at least one application specific integrated circuit ASIC, or field programmable gate array FPGA.

Particularly, the processing circuitry **810** is configured to cause the control unit **800** to perform a set of operations, or steps, according to any of the methods described herein; such as method steps discussed in connection to **FIG. 1** and/or **FIG. 5.** Consequently, there is disclosed herein a control unit **800** for controlling a heavy-duty vehicle **200, 300, 400** as described herein.

For example, the storage medium **830** may store the set of operations, and the processing circuitry **810** may be configured to retrieve the set of operations from the storage medium **830** to cause the control unit **800** to perform the set of operations. The set of operations may be provided as a set of executable instructions. Thus, the processing circuitry **810** is thereby arranged to execute method steps as herein disclosed. In particular, there is disclosed a control unit **800** for controlling an articulated vehicle **200, 300, 400** comprising a tractor unit **210, 310** and/or one or more towed vehicle units **220, 320,** the control unit comprising processing circuitry **810,** an interface **820** coupled to the processing circuitry **810,** and a memory **830** coupled to the processing circuitry **810,** wherein the memory comprises machine readable computer program instructions that, when executed by the processing circuitry, causes the control unit to perform any one or more of the method steps discussed herein.

The storage medium **830** may also comprise persistent storage, which, for example, can be any single one or combination of magnetic memory, optical memory, solid state memory or even remotely mounted memory.

The control unit **800** may further comprise an interface **820** for communications with at least one external device. As such, the interface **820** may comprise one or more transmitters and receivers, comprising analogue and digital components and a suitable number of ports for wireline or wireless communication.

The processing circuitry **810** controls the general operation of the control unit **800,** e.g., by sending data and control signals to the interface **820** and the storage medium **830,** by receiving data and reports from the interface **820,** and by retrieving data and instructions from the storage medium **830.** Other components, as well as the related functionality, of the control node are omitted in order not to obscure the concepts presented herein.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

**Claims**

1.  A computer system (290, 600) for detecting potential rollover situations for a vehicle (200, 300, 400) comprising one or more vehicle units (210, 220, 310, 320), the computer system comprising processing circuitry configured to:

    acquire lateral and vertical wheel forces (431, 432, 433, 434, 441, 442, 443, 444, 445, 446, 447, 448) for one of the vehicle units; and
    detect potential rollover for the vehicle unit based on the lateral and vertical wheel forces as compared between first and second lateral sides (461, 462) of the vehicle unit.

2. A computer-implemented method (100) for detecting potential rollover situations for a vehicle (200, 300, 400) comprising one or more vehicle units (210, 220, 310, 320), the method comprising:

acquiring (110), by a processor device of a computer system (290, 600), lateral and vertical wheel forces (431, 432, 433, 434, 441, 442, 443, 444, 445, 446, 447, 448) for one of the vehicle units; and
detecting (120), by the processor device, potential rollover for the vehicle unit based on the lateral and vertical wheel forces as compared between first and second lateral sides (461, 462) of the vehicle unit.

3. The method of claim 2, wherein potential rollover is detected responsive to the lateral wheel forces being larger for the first lateral side (461) of the vehicle unit than for the second lateral side (462) of the vehicle unit, and the vertical wheel forces being larger for the first lateral side of the vehicle unit than for the second lateral side of the vehicle unit.

4. The method of any of claims 2-3, wherein potential rollover is detected responsive to a sum of the lateral and vertical wheel forces for the first lateral side of the vehicle unit exceeding a threshold value for the sum.

5. The method of claim 4, wherein potential rollover is detected responsive to a derivative - with regard to time - of the sum of the lateral and vertical wheel forces for the first lateral side of the vehicle unit exceeding a threshold value for the derivative.

6. The method of any of claims 2-5, wherein potential rollover is detected responsive to the lateral and/or vertical wheel forces for the second lateral side of the vehicle unit being less than respective threshold value(s) for the second lateral side.

7. The method of any of claims 2-6, wherein detecting potential rollover for the vehicle unit is further based on a roll angle (449) for the vehicle unit.

8. The method of claim 7, wherein potential rollover is detected responsive to the roll angle exceeding a threshold value for the roll angle.

9. The method of any of claims 7-8, wherein the vehicle comprises at least two vehicle units (210, 220, 310, 320), and potential rollover is detected responsive to a difference between the roll angle and another roll angle of another one of the at least two vehicle units exceeding a threshold value for the difference.

10. The method of any of claims 7-9, wherein potential rollover is detected responsive to a derivative - with regard to the roll angle - of a roll moment of the vehicle unit having a negative value and the roll moment multiplied by a sign of the roll angle exceeding a threshold value for the roll moment.

11. The method of any of claims 2-10, further comprising - responsive to detecting potential rollover for the vehicle unit - issuing (131), by the processor device, a warning for an operator of the vehicle, and/or limiting (132), by the processor device, a speed of the vehicle.

12. A vehicle (200, 300, 400) comprising one or more vehicle units (210, 220, 310, 320), and comprising the computer system of claim 1.

13. A computer program product (700) comprising program code for performing, when executed by a processor device, the method of any of claims 2-11.

14. A non-transitory computer-readable storage medium (700) comprising instructions, which when executed by a processor device, cause the processor device to perform the method of any of claims 2-11.

**Patentansprüche**

1. Computersystem (290, 600) zum Erkennen potenzieller Überschlagsituationen für ein Fahrzeug (200, 300, 400), umfassend eine oder mehrere Fahrzeugeinheiten (210, 220, 310, 320), das Computersystem umfassend Verarbeitungsschaltungen, die zu Folgendem konfiguriert sind:

Erfassung seitlicher und vertikaler Radkräfte (431, 432, 433, 434, 441, 442, 443, 444, 445, 446, 447, 448) für eine der Fahrzeugeinheiten; und
Erkennen eines möglichen Überschlags der Fahrzeugeinheit basierend auf den seitlichen und vertikalen Radkräften im Vergleich zwischen der ersten und der zweiten seitlichen Seite (461, 462) der Fahrzeugeinheit.

2. Computerimplementiertes Verfahren (100) zum Erkennen potenzieller Überschlagsituationen für ein Fahrzeug (200, 300, 400), umfassend eine oder mehrere Fahrzeugeinheiten (210, 220, 310, 320), das Verfahren umfassend:

Erfassen (110), durch eine Prozessorvorrichtung eines Computersystems (290, 600), von seitlichen und vertikalen Radkräften (431, 432, 433, 434, 441, 442, 443, 444, 445, 446, 447, 448) für eine der Fahrzeugeinheiten; und
Erkennen (120) eines potentiellen Überschlags der Fahrzeugeinheit durch die Prozessorvorrichtung, basierend auf den seitlichen und vertikalen Radkräften im Vergleich zwischen einer ersten und einer zweiten seitlichen Seite (461, 462) der Fahrzeugeinheit.

3. Verfahren nach Anspruch 2, wobei ein potenzieller Überschlag als Reaktion darauf erkannt wird, dass die seitlichen Radkräfte für die erste seitliche Seite (461) der Fahrzeugeinheit größer sind als für die zweite seitliche Seite (462) der Fahrzeugeinheit und dass die vertikalen Radkräfte für die erste seitliche Seite der Fahrzeugeinheit größer sind als für die zweite seitliche Seite der Fahrzeugeinheit.

4. Verfahren nach einem der Ansprüche 2-3, wobei ein möglicher Überschlag erkannt wird, wenn die Summe der seitlichen und vertikalen Radkräfte für die erste seitliche Seite der Fahrzeugeinheit einen Schwellenwert für die Summe überschreitet.

5. Verfahren nach Anspruch 4, wobei ein potenzieller Überschlag erkannt wird, wenn als Reaktion auf eine zeitliche Ableitung der Summe der seitlichen und vertikalen Radkräfte für die erste seitliche Seite der Fahrzeugeinheit einen Schwellenwert für die Ableitung überschreitet.

6. Verfahren nach einem der Ansprüche 2-5, wobei ein potenzieller Überschlag als Reaktion darauf erkannt wird, dass die seitlichen und/oder vertikalen Radkräfte für die zweite seitliche Seite der Fahrzeugeinheit geringer sind als jeweilige Schwellenwerte für die zweite seitliche Seite.

7. Verfahren nach einem der Ansprüche 2-6, wobei ein Erkennen eines potenziellen Überschlags der Fahrzeugeinheit ferner auf einem Rollwinkel (449) der Fahrzeugeinheit basiert.

8. Verfahren nach Anspruch 7, wobei ein potenzieller Überschlag als Reaktion darauf erkannt wird, dass der Rollwinkel einen Schwellenwert für den Rollwinkel überschreitet.

9. Verfahren nach einem der Ansprüche 7-8, wobei das Fahrzeug mindestens zwei Fahrzeugeinheiten (210, 220, 310, 320) umfasst und ein möglicher Überschlag als Reaktion auf eine Differenz zwischen dem Rollwinkel und einem anderen Rollwinkel einer anderen der mindestens zwei Fahrzeugeinheiten, die einen Schwellenwert für die Differenz überschreitet, erkannt wird.

10. Verfahren nach einem der Ansprüche 7-9, wobei ein potenzieller Überschlag erkannt wird, wenn als Reaktion auf eine Ableitung - in Bezug auf den Rollwinkel - eines Rollmoments der Fahrzeugeinheit einen negativen Wert aufweist und das Rollmoment multipliziert mit dem Vorzeichen des Rollwinkels einen Schwellenwert für das Rollmoment überschreitet.

11. Verfahren nach einem der Ansprüche 2-10, ferner umfassend - als Reaktion auf ein Erkennen eines potenziellen Überschlags der Fahrzeugeinheit - ein Ausgeben (131), durch die Prozessorvorrichtung, einer Warnung für einen Bediener des Fahrzeugs und/oder ein Begrenzen (132), durch die Prozessorvorrichtung, einer Geschwindigkeit des Fahrzeugs.

12. Fahrzeug (200, 300, 400), umfassend eine oder mehrere Fahrzeugeinheiten (210, 220, 310, 320), und umfassend das Computersystem nach Anspruch 1.

13. Computerprogrammprodukt (700), umfassend Programmcode, um bei Ausführung durch eine Prozessorvorrichtung das Verfahren nach einem der Ansprüche 2-11 durchzuführen.

14. Nicht-transitorisches computerlesbares Speichermedium (700), umfassend Anweisungen, die, wenn sie von einer Prozessorvorrichtung ausgeführt werden, die Prozessorvorrichtung veranlassen, das Verfahren nach einem der Ansprüche 2-11 durchzuführen.

**Revendications**

1. Système informatique (290, 600) pour détecter des situations de renversement potentiel pour un véhicule (200, 300, 400) comprenant une ou plusieurs unités de véhicule (210, 220, 310, 320), le système informatique comprenant des circuits de traitement configurés pour :

   acquérir les forces latérales et verticales exercées sur les roues (431, 432, 433, 434, 441, 442, 443, 444, 445, 446, 447, 448) pour l'une des unités de véhicule ; et
   détecter un retournement potentiel pour l'unité de véhicule sur la base des forces latérales et verticales exercées sur les roues, comparées entre les premier et second côtés latéraux (461, 462) de l'unité de véhicule.

2. Procédé (100) mis en œuvre par ordinateur pour détecter des situations de retournement potentiel pour un véhicule (200, 300, 400) comprenant une ou plusieurs unités de véhicule (210, 220, 310, 320), le procédé comprenant :

   l'acquisition (110), par un dispositif de traitement d'un système informatique (290, 600), des forces latérales et verticales exercées sur les roues (431, 432, 433, 434, 441, 442, 443, 444, 445, 446, 447, 448) pour l'une des unités de véhicule ; et
   la détection (120), par le dispositif de traitement, d'un retournement potentiel pour l'unité de véhicule sur la base des forces latérales et verticales exercées sur les roues, comparées entre les premier et second côtés latéraux (461, 462) de l'unité de véhicule.

3. Procédé selon la revendication 2, dans lequel le retournement potentiel est détecté lorsque les forces latérales exercées sur les roues sont plus importantes pour le premier côté latéral (461) de l'unité de véhicule que pour le second côté latéral (462) de l'unité de véhicule, et que les forces verticales exercées sur les roues sont plus importantes pour le premier côté latéral de l'unité de véhicule que pour le second côté latéral de l'unité de véhicule.

4. Procédé selon l'une quelconque des revendications 2 à 3, dans lequel le retournement potentiel est détecté lorsqu'une somme des forces latérales et verticales exercées sur les roues pour le premier côté latéral de l'unité de véhicule dépasse une valeur seuil pour la somme.

5. Procédé selon la revendication 4, dans lequel le retournement potentiel est détecté lorsqu'une dérivée, par rapport au temps, de la somme des forces latérales et verticales exercées sur les roues pour le premier côté latéral de l'unité de véhicule dépasse une valeur seuil pour la dérivée.

6. Procédé selon l'une quelconque des revendications 2 à 5, dans lequel le retournement potentiel est détecté lorsque les forces latérales et/ou verticales exercées sur les roues pour le second côté latéral de l'unité de véhicule sont inférieures une ou plusieurs valeurs seuils respectives pour le second côté latéral.

7. Procédé selon l'une quelconque des revendications 2 à 6, dans lequel la détection d'un retournement potentiel pour l'unité de véhicule est en outre fondée sur un angle de roulis (449) de l'unité de véhicule.

8. Procédé selon la revendication 7, dans lequel le retournement potentiel est détecté lorsque l'angle de roulis dépasse une valeur seuil pour l'angle de roulis.

9. Procédé selon l'une quelconque des revendications 7 à 8, dans lequel le véhicule comprend au moins deux unités de véhicule (210, 220, 310, 320), et le retournement potentiel est détecté lorsqu'une différence entre l'angle de roulis et un autre angle de roulis d'une autre unité de véhicule des au moins deux unités de véhicule dépasse une valeur seuil pour la différence.

10. Procédé selon l'une quelconque des revendications 7 à 9, dans lequel le retournement potentiel est détecté lorsqu'une dérivée, par rapport à l'angle de roulis, d'un moment de roulis de l'unité de véhicule a une valeur négative et que le moment de roulis multiplié par un signe de l'angle de roulis dépasse une valeur seuil pour le moment de roulis.

11. Procédé selon l'une quelconque des revendications 2 à 10, comprenant en outre, en réponse à la détection d'un retournement potentiel de l'unité de véhicule, l'émission (131), par le dispositif de traitement, d'un avertissement pour un opérateur du véhicule, et/ou la limitation (132), par le dispositif de traitement, d'une vitesse du véhicule.

12. Véhicule (200, 300, 400) comprenant une ou plusieurs unités de véhicule (210, 220, 310, 320), et comprenant le système informatique selon la revendication 1.

13. Produit de programme informatique (700) comprenant un code de programme pour réaliser, lorsqu'il est exécuté par un dispositif de traitement, le procédé selon l'une quelconque des revendications 2 à 11.

14. Support de stockage non transitoire lisible par ordinateur (700) comprenant des instructions qui, lorsqu'elles sont exécutées par un dispositif de traitement, amènent le dispositif de traitement à réaliser le procédé selon l'une quelconque des revendications 2 à 11.

<u>100</u>

| 110 |
| --- |
| Acquire lateral and vertical wheel forces |

| 120 |
| --- |
| Detect potential rollover based on forces comparison |

| 131 |
| --- |
| Issue warning |

| 132 |
| --- |
| Limit speed |

# FIG. 1

<u>200</u>

210      290      220

280

# FIG. 2

FIG. 3

FIG. 4

FIG. 5

FIG. 6

FIG. 7

FIG. 8

**EP 4 606 665 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2001254707 A1
- US 2010274450 A1
- US 2005033486 A1
- US 2010017059 A1